# EUROPÄISCHE PATENTSCHRIFT

(11) **EP 3 616 978 B1**
(45) Veröffentlichungstag und Bekanntmachung des Hinweises auf die Patenterteilung: **08.03.2023**
(21) Anmeldenummer: 19194626.8
(22) Anmeldetag: 30.08.2019
(51) Int. Cl.: B60L 53/30, B60L 53/60, B60L 53/66, B64F 1/32, B64F 1/00, B60L 53/80, B60L 53/68, G01C 21/34, G05D 1/02

(54) **STROMVERSORGUNGS-SYSTEM SOWIE BETRIEBS-VERFAHREN HIERFÜR**
POWER SUPPLY SYSTEM AND OPERATING METHOD FOR SAME
SYSTÈME D'ALIMENTATION ÉLECTRIQUE AINSI QUE PROCÉDÉ DE FONCTIONNEMENT CORRESPONDANT

(30) Priorität: 03.09.2018 DE 102018121441
(43) Veröffentlichungstag der Anmeldung: 04.03.2020
(73) Patentinhaber: MULAG FAHRZEUGWERK Heinz Wössner GmbH & CO. KG, 77728 Oppenau (DE)
(72) Erfinder: WÖSSNER, Holger, 77728 Oberkirch (DE)
(74) Vertreter: Weickmann & Weickmann PartmbB

(56) Entgegenhaltungen:
- WO-A1-2018/140050
- DE-A1-102012 214 750
- DE-A1-102014 006 960
- DE-A1-102015 225 789
- DE-A1-102016 221 829
- US-B1- 9 778 653

## Beschreibung

### I. Anwendungsgebiet

Die Erfindung betrifft die Stromversorgung von elektrischen Akkus, die sich nicht oder nur selten in Kontakt mit einem Stromnetz oder einem großen Versorgungs-Akku befinden.

### II. Technischer Hintergrund

Nachdem immer mehr Energie-Verbraucher wie Arbeitsgeräte und selbstfahrende Fahrzeuge, hinsichtlich ihrer Arbeitsfunktionen und/oder ihres Fahrantriebes elektrisch betrieben werden und aus Akkus mit elektrischem Strom versorgt werden, stellt sich das Problem des Nachladens von deren Verbraucher-Akkus.

Wenn solche Verbraucher über längere Zeit oder eventuell ständig an einem Einsatzort eingesetzt werden, an dem kein Netzanschluss zur Verfügung steht, wie etwa in der freien Natur, gibt es nur zwei Möglichkeiten:
- Entweder den Austausch eines leeren Verbraucher-Akkus gegen einen geladenen Verbraucher-Akku, der von einem speziellen Versorgungsfahrzeug vom und zum Ort des Verbraucher-Akkus gebracht wird:
   Dies erfordert eigene Versorgungsfahrzeuge und zusätzlich einen hohen logistischen und auch personellen Aufwand.
- Oder den Verbraucher, der den Verbraucher-Akku enthält, kurz vor der vollständigen Leerung des Akkus über die meist weite Strecke bis zur Ladestation, meist einem Netzanschluss, zu bringen, dort zu laden und dann wieder zum Einsatzort zurückzubringen:
   Dies bedingt eine hohe Ausfallzeit des Verbrauchers, bei dem es sich beispielsweise um ein Arbeitsgerät handelt.

Darüber hinaus gibt es Verbraucher in Form von Arbeitsgeräten, die bedingt durch den Arbeitseinsatz mehr oder weniger häufig, oft regelmäßig, von einem Pendelfahrzeug angefahren werden, beispielsweise um Materialien, die das Arbeitsgerät benötigt oder produziert hat, an- oder abzutransportieren.

Ein typischer Einsatzfall sind Arbeitsgeräte auf dem Vorfeld eines Flughafens:
Dort werden selbstfahrende Gepäck-Förderer zum Transport von Gepäckstücken oder Highloader zum Anheben und Absenken von Fracht-Containern zu einem zu be- und / oder entladenden, geparkten Flugzeug benutzt und sind dort beispielsweise eine Stunde im Einsatz und werden danach auf dem Vorfeld zum nächsten zu be- und / oder entladenden Flugzeug gebracht und dort wiederum eine Zeit lang eingesetzt.

Solche Arbeitsgeräte werden meist erst am Ende des Arbeitstages zum Terminal oder einem Hangar verbracht, wo es auch einen Anschluss an das Stromnetz gibt. Auf dem Vorfeld dagegen sind oft keine elektrischen Ladestationen vorhanden.

Solche am Flugzeug eingesetzten Arbeitsgeräte werden jedoch regelmäßig von Pendelfahrzeugen angefahren, entweder Container-Transportern oder Gepäck-Transportern, um die Fracht anzuliefern oder abzuholen.

Andere Einsatzbeispiele sind etwa Arbeitsgeräte auf Baustellen oder Arbeitsgeräte, die von Landschaftsgärtnern oder in der Holzwirtschaft in der freien Natur eingesetzt werden, oder Arbeitsgeräte, die Kies oder andere Mineralien abbauen.

Dabei ist es auch in zunehmenden Maß bei einem Teil dieser Arbeitseinsätze aus Umweltschutz-Gründen verboten, Verbrennungsmotoren einzusetzen.

Die Druckschrift DE 10 2015 225789, welche den nächstliegenden Stand der Technik bildet, offenbart ein Verfahren gemäß dem Oberbegriff des Anspruchs 1 sowie ein System gemäß dem Oberbegriff des Anspruchs 5.

Die internationale Anmeldung WO 2018 / 140 050 A1 offenbart ein Verfahren sowie ein System zum Laden eines elektrischen Verbraucher-Akkus mittels Drohnen, die auf einem zu ladenden Fahrzeug landen und das Fahrzeug mit elektrischer Energie versorgen.

Ferner wird auf das Patent US 9,778,653 B1 sowie die deutschen Patentanmeldungen DE 10 2012 214750, DE 10 2016 221 829 A1 und DE 10 204 006 960 A1 hingewiesen.

### III. Darstellung der Erfindung

### a) Technische Aufgabe

Es daher die Aufgabe gemäß der Erfindung, ein Verfahren für die Stromversorgung von Verbraucher-Akkus zur Verfügung zu stellen, die sich meist oder immer weit abseits einer Ladestation, insbesondere eines Anschlusses an das elektrische Stromnetz, befinden sowie ein Stromversorgungssystem für solche Verbraucher-Akkus.

### b) Lösung der Aufgabe

Diese Aufgabe wird durch das Verfahren des Anspruchs 1 gelöst.

Ein solcher Verbraucher-Akku wird periodisch mittels eines Pendel-Akkus nachgeladen, der seinerseits an einer vom Verbraucher-Akku entfernten Ladestation geladen, insbesondere periodisch nachgeladen, wird und dann im geladenen Zustand zu dem Verbraucher-Akku gebracht wird und diesen auflädt.

Dadurch können auch weit von einem Stromnetz entfernte Verbraucher-Akkus und die damit versorgten Arbeitsgeräte ständig einsatzbereit geladen sein. Zusätzlich wird dadurch eine zeitliche Dezentralisierung der Ladevorgänge der Verbraucher-Akkus erreicht, die eine kurzzeitige Netzüberlastung vermeiden hilft.

Anschließend wird der dann teilweise oder vollständig entleerte Pendel-Akku zu dieser oder einer anderen Ladestation gebracht und dort erneut geladen.

Je nach Kapazität des Pendel-Akkus und des Verbraucher-Akkus kann ein solcher Pendel-Akku auch mehrere Verbraucher-Akkus hintereinander laden, bis seine eigene Ladung erschöpft ist, und muss erst dann eine Ladestation aufsuchen. Gerade wenn die so versorgten Verbraucher-Akkus selbst wieder erhebliche Abstände zueinander aufweisen, wird dies nicht immer die gleiche Ladestation sein.

Erfindungsgemäß ist der Pendel-Akku dabei Bestandteil eines PendelFahrzeuges. Der Verbraucher-Akku kann Bestandteil eines Verbraucher-Arbeitsgerätes, auch eines selbstfahrenden Verbraucher-Arbeitsgerätes, sein, wobei das Pendel-Fahrzeug den Verbraucher-Akku, insbesondere das Verbraucher-Arbeitsgerät, aus einem anderen Grund als nur wegen der Stromversorgung ohnehin regelmäßig anfährt wie eingangs beschrieben.

Vorzugsweise werden beim Verbraucher-Arbeitsgerät dessen Arbeitsfunktionen elektrisch betrieben und aus dem Verbraucher-Akku versorgt, wenn es sich dabei jedoch um ein selbstfahrendes Arbeitsgerät handelt, kann auch der Fahrantrieb aus dem Verbraucher-Akku mit Strom versorgt werden.

Das gleiche gilt auch für das Pendel-Fahrzeug.

Dann kann neben der Hauptaufgabe, die das Pendel-Fahrzeug zu erfüllen hat, mit sehr geringem oder vollständig ohne zusätzlichen Zeitaufwand auch die Stromversorgung des Verbraucher-Akkus durchgeführt werden.

Dies ist insbesondere dann möglich, wenn das Pendelfahrzeug aufgrund seiner Hauptaufgabe eine gewisse Verweilzeit am Verbraucher-Arbeitsgerät und insbesondere dessen Verbraucher-Akku benötigt, die ausreicht um dann die - von Akku zu Akku sehr schnelle Stromübertragung - zum Nachladen des Verbraucher-Akkus zu nutzen.

Wenn beispielsweise die Betriebszeit eines vollständig geladenen Verbraucher-Akkus deutlich länger ist, beispielsweise ein Mehrfaches beträgt, wie die periodischen Abstände, in denen er von einem Pendel-Fahrzeug angefahren wird, muss bei einem Anfahren durch das Pendelfahrzeug keine vollständige Ladung in den Verbraucher-Akku eingebracht werden, sondern es genügt eine Teil-Ladung.

Der zusätzliche Aufwand für das Nachladen wird dadurch weiter reduziert, dass das Nachladen des Verbraucher-Akkus durch den Pendel-Akku und/oder des Pendel-Akku durch die Ladestation jeweils automatisch erfolgt, wenn das Pendel-Fahrzeug eine definierte Relativ-Position zum Verbraucher-Fahrzeug für dessen Nachladung oder zur Ladestation für die Nachladung des Pendel-Akkus erreicht hat.

Das Nachladen kann dabei sowohl kontaktierend als auch kontaktlos erfolgen.

Dabei kann der Pendel-Akku nicht nur für den Stromtransport zum Verbraucher-Akku genutzt werden, sondern auch für den Fahrantrieb des PendelFahrzeuges selbst.

Neben der Versorgung des Verbraucher-Akkus mit Strom kann dieser während des Ladens auch mit Daten versorgt werden und/oder Daten an das PendelFahrzeug übertragen, die diese Daten beim Nachladen an der Ladestation an einem dortigen Daten-Empfänger weitergibt.

Dadurch kann der Aufwand und die Unsicherheit der Nutzung einer Funk- oder Internetverbindung vermieden werden und insbesondere die Daten-Sicherheit besser gewahrt werden.

Hinsichtlich des Stromversorgungs-Systems wird diese Aufgabe durch die Merkmale des Systems nach Anspruch 5.
- Der Verbraucher-Akku verfügt über einen Ladeanschluss
- der Pendel-Akku verfügt sowohl über einen Lade-Anschluss, wobei der Lade-Anschluss des Pendel-Akkus zum Lade-Anschluss des Verbraucher-Akkus kompatibel sein muss und
- eine ist Ladestation vorhanden,
die einen Lade-Anschluss aufweist, der mit dem Lade-Anschluss des Pendel-Akkus kompatibel ist.

Es soll klargestellt sein, dass über einen Lade-Anschluss der entsprechende Akku sowohl aufgeladen als auch entladen werden kann Bereits bei dieser Grundkonstellation kann der Pendel-Akku zwischen der Ladestation und dem Verbraucher-Akku hin und her transportiert werden und dabei den gewünschten Stromtransport zum Verbraucher-Akku durchführen. Vorzugsweise ist der Verbraucher-Akku Bestandteil eines Verbraucher-Arbeitsgerätes.

Dieses kann immobil sein oder auch ein mobiles, insbesondere selbstfahrendes, Verbraucher-Arbeitsgerät sein, wobei die Arbeitsfunktionen und/oder der ggfs. vorhandene Fahrantrieb des selbstfahrenden Verbraucher-Arbeitsgerätes aus dem Verbraucher-Akku des Verbraucher-Arbeitsgerätes mit Energie versorgt werden können.

Ein selbstfahrendes Verbraucher-Arbeitsgerät kann nicht nur einteilig aus Chassis und Arbeitsgeräte-Aufbau bestehen, sondern auch zweiteilig dahingehend ausgebildet sein, dass es einerseits ein Chassis umfasst, welches in der Lage ist, den Arbeitsgeräte-Aufbau zu transportieren, insbesondere aufzusatteln und abzusetzen, welcher im abgesetzten Zustand immobil am Einsatzort verweilt. Währenddessen kann das Chassis andere Arbeitsgeräte-Aufbauten von einem Einsatzort zum nächsten transportieren.

Erfindungsgemäß ist der Pendel-Akku Bestandteil eines Pendel-Fahrzeugs, welches ebenfalls vorzugsweise ein selbstfahrendes Pendel-Fahrzeug ist, aber auch als selbstfahrendes Arbeitsgerät andere Hauptaufgaben als die des Transports von Produkten ausführen kann, beispielsweise als ContainerTransporter mittels entsprechender Handhabung-Vorrichtungen die Container auf dem Container-Transporter verschieben oder drehen kann.

Bei einem selbstfahrenden Pendel-Fahrzeug, welches zur Erfüllung seiner Haupt-Aufgabe zwischen dem Verbraucher-Arbeitsgerät und einer oder mehreren Basisstationen hin und her pendelt, wird der elektrische Fahrantrieb vorzugsweise aus dem Pendel-Akku versorgt.

Dieser muss entsprechend dimensioniert sein, um einerseits die zwischen den Nachlade-Vorgängen an der Ladestation zu bewältigenden Fahrstrecken und zusätzlich die an den mindestens einen Verbraucher-Akku zu liefernde Strommenge zu beinhalten.

Vorzugsweise ist die Ladestation an der Basisstation angeordnet oder Bestandteil hiervon, die das Pendel-Fahrzeug zu Erfüllung seiner Hauptaufgabe ohnehin häufig immer wieder anfährt, da es von dieser Basisstation Container abholt oder dort Container angeliefert. Beispielsweise befindet sich bei einem Einsatz in einem Flughafen die Basisstation in der Regel im Terminal des Flughafens.

Wenn das Pendel-Fahrzeug außer dem reinen Transport weitere Arbeitsaufgaben erfüllen soll, werden vorzugsweise auch diese Arbeitsfunktionen aus dem Pendel-Akku mit Energie versorgt. Gleiches gilt natürlich für untergeordnete Funktionen wie Beleuchtung, Heizung, elektronische Steuerung etc. des Pendel-Fahrzeuges, was gleichermaßen für ein Verbraucher-Arbeitsgerät gilt.

Das Pendelfahrzeug ist analog zum Verbraucher-Arbeitsgerät zweiteilig aus Chassis und Pendel-Aufbau ausgebildet, der aufgesattelt und auch abgesetzt werden kann.

Insbesondere können gerade in einem begrenzten Einsatzgebiet Fahrzeuge, seien es Pendel-Fahrzeuge oder selbstfahrende Arbeitsgeräte, als autonom fahrende Fahrzeuge ausgebildet sein, wobei auch die benötigte Energie für die Sensorik und Steuerung für das autonome Fahren aus dem Verbraucher-Akku bzw. Pendel-Akku geliefert wird und/oder die benötigten Daten ebenfalls mittels des Pendel-Fahrzeuges übermittelt werden.

Die Ladestation, an der der Pendel-Akku nachgeladen wird, ist vorzugsweise eine Ladestation, die mit einem stationären Stromnetz verbunden ist, und/oder auch ein hinsichtlich seiner Kapazität großer Versorgungs-Akku verglichen mit der Kapazität des Pendel-Akkus, indem die Kapazität des Versorgungs-Akkus mindestens das 5-fache, besser 10-fache, besser das 20-fache, besser das 30-fache des Pendel-Akkus beträgt, wobei ein solcher Versorgungs-Akku ebenso wie eine netzgebundene Ladestation im Wechsel oder gleichzeitig mehrere Pendel-Akkus laden kann.

Um keinen zusätzlichen personellen Aufwand für die Stromübergabe von einem Akku zum anderen zu benötigen, ist an jeder Strom-Übergabestelle zwischen zwei der beschriebenen Akkus oder der Ladestation eine Nachlade-Vorrichtung vorhanden, die den jeweiligen Lade-Vorgang automatisch in Gang setzt und durchführt, sobald das Pendel-Fahrzeug, insbesondere der Pendel-Akku, entweder zu dem Verbraucher-Arbeitsgerät, insbesondere dessen Verbraucher-Akku oder zu der Basisstation, insbesondere der dortigen Ladestation, eine bestimmte Relativ-Position eingenommen hat.

Die Nachlade-Vorrichtung kann dabei kontaktierend oder kontaktlos arbeiten.

Vorzugsweise besteht die Nachlade-Vorrichtung in einer automatischen LadeKupplung, von deren zueinander komplementären beiden Kupplungs-Teilen je eines an einem der beiden miteinander zu verbindenden Akkus bzw. den diese tragenden Fahrzeugen oder der Basisstation angeordnet ist. In jedem der beiden Kopplungs-Teile ist einer von 2 zueinander komplementären Lade-Anschlüssen vorhanden, die bei Erreichen einer bestimmten Relativposition der Kupplung-Teile, insbesondere bei deren kontaktieren, automatisch miteinander gekoppelt werden.

Wenigstens eines der beiden Kupplungs-Teile kann dabei eine Zentriervorrichtung und/oder eine, insbesondere quer zur Annäherungsrichtung bewegliche, Ausgleichsvorrichtung für die beiden sich aneinander annähernden Einheiten aufweisen

Neben den erwähnten, zueinander kompatiblen Lade-Anschlüssen der Akkus und auch der Ladestation können parallel und vorzugsweise ebenfalls automatisch koppelnd jeweils Daten-Anschlüsse vorhanden sein, um zusammen mit oder parallel zu dem Strom mittels des Pendel-Fahrzeuges auch Daten zwischen der Basisstation und dem Verbraucher-Arbeitsgerät zu transportieren, beispielsweise betreffend die Arbeitsleistung, die zurückgelegten Wege oder anderer Informationen des Arbeitsgerätes.

Die Nachteile der Datenübertragung per Funk oder Internet können dadurch vermieden werden, jedoch soll diese nicht ausgeschlossen sein.

### c) Ausführungsbeispiele

Ausführungsformen gemäß der Erfindung sind im Folgenden beispielhaft näher beschrieben. Es zeigen:
- **Figur 1:**: eine Aufsicht auf ein Flughafen-Vorfeld,
- **Figuren 2a** - **c:**: das Beladen eines Flugzeuges mit einem Container in mehreren Arbeits-Situationen.

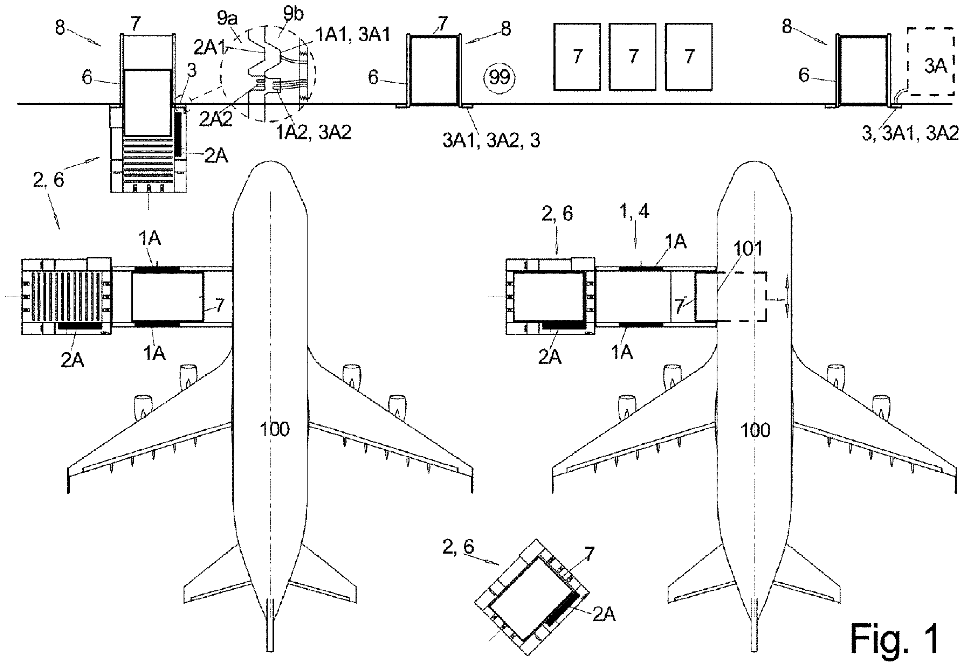

**Figur 1** zeigt in der Aufsicht auf das Vorfeld eines Flughafens zwei Flugzeuge 100, die beide mit Containern 7 beladen werden sollen.

Diese Container 7 werden auf einer Laderampe 99 vorgehalten, und müssen von dort - einzelnen oder paarweise - von einem Pendelfahrzeug 2 in Form eines Container-Transporters 6 abgeholt und zu dem jeweiligen Flugzeug 100 transportiert werden, wo sie an einen dort am Flugzeug 100 aufgestellten sogenannten Highloader 4 übergeben werden oder an ein anderes Verbraucher-Arbeitsgerät 1.

Die Größenverhältnisse sind hier unrealistisch dargestellt, da in der Realität die Flugzeuge schlanker und auch teilweise mehr als 1 km von der Laderampe 99 entfernt sind.

In der Regel sind an der Laderampe 99 mehrere Basisstationen 8 ausgebildet, die geeignet sind, dass ein Container-Transporter 6 dort angedockt und einen dort - beispielsweise zwischen Führungen und auf einer Übergabevorrichtung 5 stehenden - Container 7 an einen solchen Container-Transporter 6 übergeben werden.

Sobald dieser den Container 7 aufgesattelt hat, fährt er zum Flugzeug 100, an dem ein Highloader 4 aufgebaut ist.

Dies bedeutet, dass von den zwei unabhängig voneinander in der Höhe beweglichen Ladeplattformen 4a, b des Highloaders 4 die eine Ladeplattform 4a beim Aufstellen neben dem Flugzeug hochgefahren wird auf das Niveau der Unterkante der Ladeluke 101 des Flugzeuges 100 und mittels des Fahrantriebes 1a diese Ladeplattform 4a des Highloaders 4 bis auf eine möglichst geringe Lücke an die Unterkante der Ladeluke 101 herangefahren wird, ohne das Flugzeug 100 zu beschädigen.

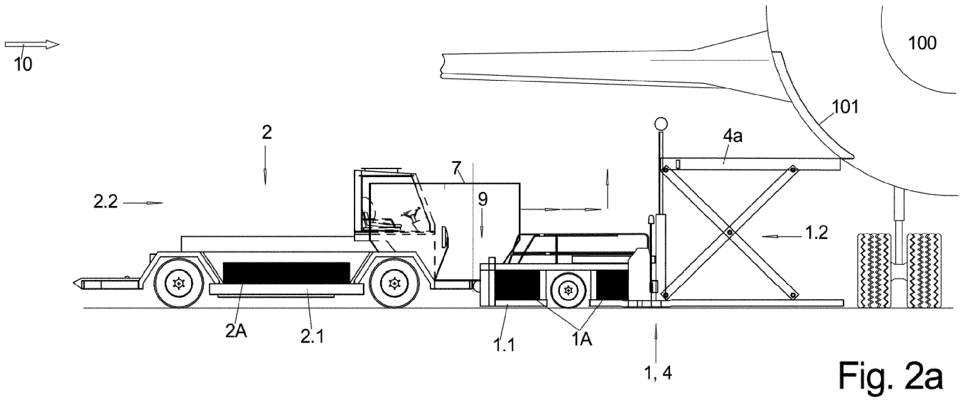

Während der gesamten Beladung des Flugzeuges 100 verbleibt diese Ladeplattform 4a meist in dieser Position - die gegebenenfalls in der Höhe nach unten nachjustiert wird, falls das Fahrwerk des Flugzeuges 100 durch die zunehmende Beladung einfedert - dagegen wird die andere Ladeplattform 4b zwischen einer mit der Ladeplattform 4a fluchtenden hohen Position und einer mit einem anliefernden Containertransporter 6 und dessen Ladeplattform fluchtenden niedrigen Position hin und her verfahren, um den angelieferten Container 7 auf der niedrigen Position zu übernehmen wie in **Figur 2a** dargestellt.

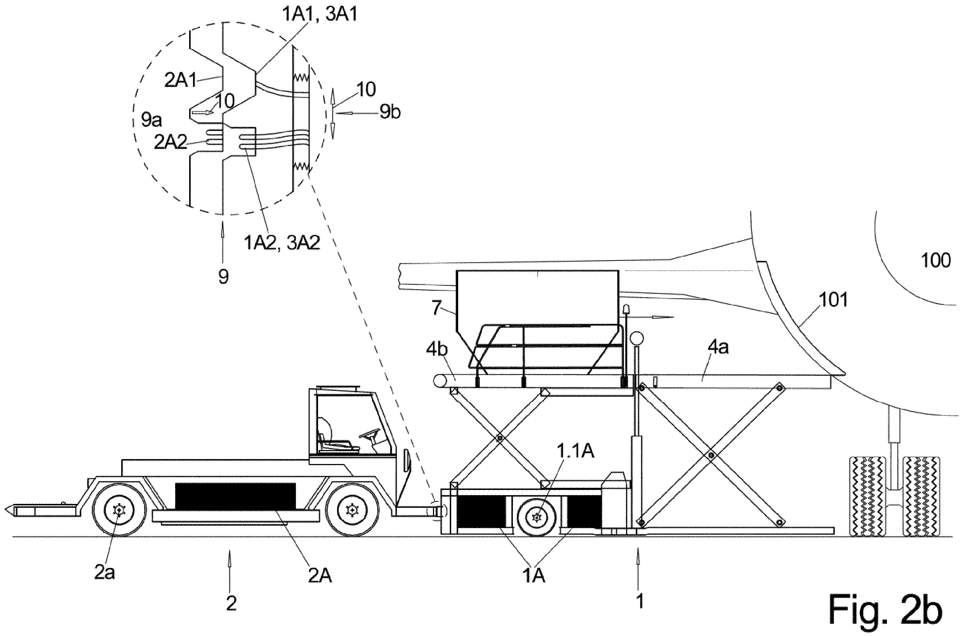

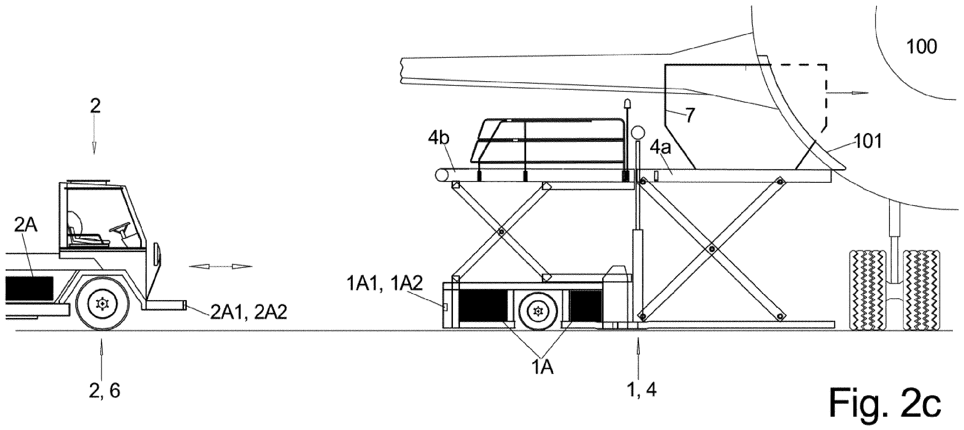

Danach wird die Ladeplattform 4b mit diesem Container 7 hochgefahren auf die hohe Position gemäß **Figur 2b** und anschließend übergeben an die dann damit fluchtende Ladeplattform 4a und von dort weiter ins Innere des Flugzeuges 100 geschoben, wie in **Figur 2c** dargestellt.

Die Ladeplattformen 4a, b werden mittels je eine Scherengestänges vertikal bewegt.

Beim Entladen läuft der gesamte Vorgang umgekehrt ab, und die aus dem Flugzeug 100 entnommenen Container 7 werden von den Containertransportern 6 zu einem entfernten Bestimmungsort wie etwa der Laderampe 99 gebracht.

Nachdem mittels eines Highloaders 4 ein Flugzeug 100 fertig beladen oder entladen wurde, fährt dieser in der Regel direkt zum Ort seines nächsten Arbeitsauftrages, in der Regel zu einem anderen Flugzeug auf dem Vorfeld, und ist auf diese Art und Weise häufig 16 Stunden pro Tag oder mehr im Einsatz. Deshalb benötigen heute solche Containertransporter 6 oder generell Verbraucher-Arbeitsgeräte 1, die ständig von einem zum nächsten Einsatzort wechseln, hierfür einen großen Energievorrat, weshalb diese Verbraucher-Arbeitsgeräte heute meist mit Verbrennungsmotoren betrieben werden, da ein Treibstofftank hierfür mit einem Volumen von meist weniger als 100 auskommt.

Um solche Verbraucher-Arbeitsgeräte elektrisch betreiben zu können, müssten die entsprechenden elektrischen Akkus so groß und schwer sein, dass dies nicht akzeptabel ist, wenn der Energieinhalt für beispielsweise 16 Arbeitsstunden ausreichen soll.

Wie die Figuren zeigen, besitzen diese - vorzugsweise sowohl hinsichtlich der Arbeitsfunktionen als auch des Fahrantriebes 1.1 - betriebenen Verbraucher-Arbeitsgeräte 1 wie etwa ein Highloader 4 dagegen erfindungsgemäß nur einen oder zwei relativ kleine Verbraucher-Akkus 1A, da diese immer wieder nachgeladen werden.

Dabei besteht der Nachladevorgang nicht in einem separaten Vorgang und mit einem separaten Ladefahrzeug, sondern dies erfolgt mithilfe des das Verbraucher-Arbeitsgerät ohnehin in relativ kurzen Zeitabständen immer wieder anfahrenden Pendelfahrzeuges 2, hier des Containertransporters 6, der selbst elektrisch betrieben wird und einen Pendel-Akku 2A enthält, dessen Kapazität größer ist als für die eigene Energieversorgung benötigt. Der Pendel-Akku 2A enthält zumindest eine Überschuss-Kapazität, die bei jedem Andocken an dem Verbraucher-Arbeitsgerät 1, hier dem Highloader 4, dessen Verbraucher-Akkus 1a nachlädt.

Da der Ladevorgang vom Pendel-Akku 2A zum Verbraucher-Akkus 1A relativ schnell vor sich geht, genügen hier die kurzen Andockzeiten von meist nur wenigen Minuten.

Der Pendel-Akku 2A seinerseits kann ebenfalls relativ klein und leicht ausgeführt werden, da dieser ebenfalls häufig über kurze Zeit nachgeladen werden kann, indem er immer beim Anfahren seiner Basisstation 8, in der Regel die Laderampe 99, von der er beim Beladen eines Flugzeuges jeweils einen Container 7 übernimmt, automatisch von einer in die Basisstation 8 integrierten Ladestation 3 während der Andockzeit dort aufgeladen wird.

Die Ladestation 3 kann ein Netzanschluss sein oder ein dort jeweils vorhandener Versorgung-Akku 3', da die Energieübertragung von Akku zu Akku und in aller Regel mittels Gleichstrom schneller vor sich geht als aus einem festen Wechselstrom-Stromnetz.

Um keine zusätzlichen Fahrzeuge, Manpower oder andere aufwendige Logistik für die Ladevorgänge zu benötigen, erfolgt ein automatisches Kuppeln der Ladekupplung 9 entweder zwischen dem Pendelfahrzeug 2 und dem Verbraucher-Arbeitsgerät 1 oder zwischen den Pendelfahrzeug 2 und dessen Basisstation 8 automatisch durch Kontaktieren, also Einnehmen einer definierten Übergabe-Position:
Wie in der Vergrößerung der **Figur 2b** dargestellt, besteht die Ladekupplung 9 aus einem Kupplungsteil 9a, welches beispielsweise am Pendel-Fahrzeug 2 angeordnet ist, und einem Kupplungsteil 9b, welches beispielsweise am Verbraucher-Arbeitsgerät 1 angeordnet ist und/oder auch an der Basisstation 8 an der dortigen Ladestation 3 vorhanden sein kann.

Durch entsprechende Ausbildung wenigstens eines der beiden Kupplungsteile kommt bei ausreichender Annäherung - wie sie auch für die Übergabe des Containers 7 notwendig ist - eine elektrische Verbindung zustande, insbesondere eine elektrische Kontaktierung:
Wie beispielsweise in der vergrößerten Darstellung der **Figur 2b** ersichtlich, ist hierfür eines der Kupplungsteile, hier 9b, gefedert in der Annäherungsrichtung 10 zueinander, und quer hierzu findet eine automatische Zentrierung der Kupplungsteile statt, indem wiederum eines der Kupplungsteile, hier das Kupplungsteil 9b, auch in Querrichtung 11 zur Annäherungsrichtung 10 begrenzt beweglich ist.

Die Vergrößerung der **Figur 2b** zeigt ferner, dass die Ladekupplung 9 in diesem Fall als Kombikupplung ausgebildet ist, indem sie zusätzlich zur Stromverbindung auch eine Datenverbindung herstellt:
Zu diesem Zweck wird bei einem Schließen der Ladekupplung 9 nicht nur der Lade-Anschluss 2A1 des Pendelfahrzeuges 2 mit dem Ladeanschluss 1A1 des Verbraucher-Arbeitsgerätes 1 oder dem Ladeanschluss 3A1 der Basisstation 8 und der dortigen Ladestation 3 verbunden, sondern zusätzlich auch ein Datenanschluss 2A2 des Pendelfahrzeuges 2 mit einem Datenanschluss 1A2, 3A2 des Verbraucherfahrzeuges 1 oder der Ladestation 3 verbunden.

Unbenommen bleibt natürlich die Datenübertragung zwischen den einzelnen Fahrzeugen und der Basisstation 8 oder einer übergeordneten Steuereinheit per Funk, die aber störanfälliger und nicht abhörsicher ist.

Sowohl das Pendelfahrzeug 2 als auch das Verbraucherfahrzeug 1 können aus Chassis 1.1 bzw. 2.1 und dem - insbesondere wechselbaren - Aufbau 1.2 bzw. 2.2 bestehen, wobei beim Pendelfahrzeug der Aufbau 2.2 aus der Ladeplattform und gegebenenfalls den Seitenwänden besteht, beim Heil oder der Aufbau 1.2 dagegen aus der Hubvorrichtung in Form der Scherengestänge und den Ladeplattformen 4a, b

In diesem Fall sind die Akkus und die Anschlüsse vorzugsweise im Chassis 1.1 bzw. 2.1 untergebracht.

### BEZUGSZEICHENLISTE

- 1: (selbstfahrendes) Verbraucher-Arbeitsgerät
- 1.1: Chassis
- 1.2: Arbeitsgerät-Aufbau
- 1a: Fahrantrieb
- 1A: Verbraucher-Akku
- 1A1: Lade-Anschluss
- 1A2: Daten-Anschluss
- 2: Pendel-Fahrzeug
- 2.1: Chassis
- 2.2: Pendel-Aufbau
- 2a: Fahrantrieb
- 2A: Pendel-Akku
- 2A1: Lade-Anschluss
- 2A2: Daten-Anschluss
- 3: Ladestation
- 3A1: Lade-Anschluss
- 3A2: Daten-Anschluss
- 3': Versorgungs-Akku, Basis-Akku
- 4: High-Loader
- 4a: Ladeplattform, Lift-Plattform
- 4b: Ladeplattform
- 5: Übergabe-Vorrichtung
- 6: Container-Transporter
- 7: Container
- 8: Be- und Entlade-Station
- 9: Lade-Kupplung
- 9a, b: Kupplungsteil
- 10: Annäherungsrichtung
- 11: Querrichtung

- 99: Laderampe
- 100: Flugzeug
- 101: Ladeluke

- P1, P2: definierte Position

## Patentansprüche

1. **Verfahren** zum Laden, mindestens eines elektrischen, insbesondere mobilen, Verbraucher-Akkus (1A), der sich nicht oder selten in Kontakt mit einem Stromnetz befindet,
wobei
ein Pendel-Akku (2A), welcher Bestandteil eines Pendel-Fahrzeuges (2) mit einem selbstfahrenden Chassis (2.1) mit einem Fahrantrieb (2.1a) ist,
- an einer vom Verbraucher-Akku (1A) entfernten Ladestation (3) geladen wird,
- im geladenen Zustand zu dem wenigstens einen Verbraucher-Akku (1A) gebracht wird,
- den Verbraucher-Akku (1A) auflädt,
- zurück zur Ladestation (3) gebracht wird und
- dort erneut geladen wird,
**dadurch gekennzeichnet, dass**
- das Pendel-Fahrzeug (2) außer zur Stromversorgung des Verbraucher-Akkus (1A) gleichzeitig auch zum Transport von Produkten zum Verbraucher-Akku (1A) und zur Ladestation (3) benutzt wird, indem es einen daran befestigbaren Pendel-Aufbau (2.2) umfasst, welcher aufsattelbar und absetzbar ist, um Produkte zu transportieren, und
- das Pendel-Fahrzeug (2) ein Produkt-Transporter für ein Flughafen-Vorfeld ist.

2. Verfahren nach Anspruch 1,
**dadurch gekennzeichnet, dass**
der Pendel-Akku (2A) nach dem Laden eines ersten Verbraucher-Akkus (1A) zum nächsten zu ladenden Verbraucher-Akku (1A) gebracht wird, insbesondere bis der Pendel-Akku (2A) entladen ist.

3. Verfahren nach einem der vorhergehenden Ansprüche,
**dadurch gekennzeichnet, dass**
der Pendel-Akku (2A) außer elektrischem Strom auch Daten von der Ladestation (3) zum Verbraucher-Akku (1A) und gegebenenfalls zurück transportiert.

4. Verfahren nach einem der vorhergehenden Ansprüche,
**dadurch gekennzeichnet, dass**
- der Verbraucher-Akku (1A) Bestandteil eines Verbraucher-Arbeitsgerätes (1) insbesondere eines selbstfahrenden Verbraucher-Arbeitsgerätes (1), ist,
- die Arbeitsfunktionen des Verbraucher-Arbeitsgerätes (1) und/oder der Fahrantrieb (1a) des selbstfahrenden Verbraucher-Arbeitsgerätes (1) elektrisch betrieben werden,
und/oder
- die Ladestation (3) automatisch funktioniert, so dass sie bei einem an der Basisstation (8) befindlichen Pendel-Akku (2A), insbesondere PendelFahrzeug (2), automatisch dessen Pendel-Akku (2A) kontaktiert und auflädt.

5. **Stromversorgungs-System** mit
- wenigstens einem Verbraucher-Akku (1A) mit einem Lade-Anschluss (1A1),
- einem Pendel-Akku (2A) mit einem Lade-Anschluss (2A1) zum Aufladen und Entladen des Pendel-Akku (2A), wobei der Pendel-Akku (2A) Bestandteil eines Pendel-Fahrzeuges (2) mit einem selbstfahrenden Chassis (2.1) mit einem Fahrantrieb (2.1a) ist, und
- einer Ladestation (3) für den Pendel-Akku (2A) mit einem Lade-Anschluss (3 A1) passend zu dem Lade-Anschluss (2A1) des Pendel-Akku (2A),
**dadurch gekennzeichnet, dass**
- das Pendel-Fahrzeug (2) einen daran befestigbaren Pendel-Aufbau (2.2) umfasst,welcher aufgesattelt und abgesetzt werden kann, so dass das Pendel-Fahrzeug (2) außer zur Stromversorgung des Verbraucher-Akkus (1A) gleichzeitig auch zum Transport von Produkten zum Verbraucher-Akku (1A) und zur Ladestation (3) benutzt werden kann, und
- das Pendel-Fahrzeug (2) ein Produkt-Transporter für ein Flughafen-Vorfeld ist.

6. System nach Anspruch 5,
**dadurch gekennzeichnet, dass**
- die Ladestation (3) ortsfest ist, und/oder
- der Verbraucher-Akku (1A) Bestandteil eines Verbraucher-Arbeitsgerätes (1), insbesondere eines selbstfahrenden Verbraucher-Arbeitsgerätes (1) ist,
- die Arbeitsfunktionen des Verbraucher-Arbeitsgerätes (1) und/oder der Fahrantrieb (1a) des selbstfahrenden Verbraucher-Arbeitsgerätes (1) elektrisch betrieben werden.

7. System nach einem der vorhergehenden System-Ansprüche,
**dadurch gekennzeichnet, dass**
- die Arbeitsfunktionen des Pendel-Fahrzeuges (2), und/oder der Fahrantrieb (2a) des selbstfahrenden Pendel-Fahrzeuges (2), elektrisch betrieben werden.

8. System nach einem der vorhergehenden System-Ansprüche,
**dadurch gekennzeichnet, dass**
- die Ladestation (3) eine netzgebundene Ladestation (3) oder ein Versorgungs-Akku (3') ist,
und/oder
- die Ladestation (3) von einer Basisstation (8) umfasst ist.

9. System nach einem der vorhergehenden Ansprüche,
**dadurch gekennzeichnet, dass**
- der Verbraucher-Akku (1A), insbesondere die Verbraucher-Arbeitsmaschine (1), insbesondere die selbstfahrende Verbraucher-Arbeitsmaschine (1), sich entfernt von einer ortsfesten Ladestation (3) befindet, insbesondere auf einer Baustelle, einem Flughafen-Vorfeld oder in freier Natur.

10. System nach einem der vorhergehenden Ansprüche,
**dadurch gekennzeichnet, dass**
- die Verbraucher-Arbeitsmaschine (1) eine Arbeitsmaschine für das Flughafen-Vorfeld ist, insbesondere ein High-Loader (4) für Container oder ein Flugzeug-Gepäck-Förderband ist
und/oder
- das Pendel-Fahrzeug (2) ein Container-Transporter (6) oder ein Gepäck-Transporter ist, deren Basisstation (8) eine Be- und Entladestation ist, die insbesondere an einer Laderampe (9) vorhanden ist.

11. System nach einem der vorhergehenden System-Ansprüche,
**dadurch gekennzeichnet, dass**
es eine Lade-Kupplung (9) umfasst, deren Kupplungs-Teile (9a, b) automatisch den Lade-Anschluss (2A1) des Pendel-Akku (2A) mit dem Lade-Anschluss (1A1) des Verbraucher-Akku (1A) oder dem Lade-Anschluss (3A1) des der Ladestation (3), insbesondere eines dortigen Basis-Akku (3') koppelt, wenn sich das Pendelfahrzeug (2), insbesondere der Pendel-Akku (2A), in einer definierten Position (P1, P2) zum Verbraucher-Arbeitsgerät (1), insbesondere zum Verbraucher-Akku (1A), befindet, oder zu einer Basisstation (8), insbesondere zur Ladestation (3), befindet.

12. System nach einem der vorhergehenden System-Ansprüche,
**dadurch gekennzeichnet, dass**
das Pendel-Fahrzeug (2), insbesondere der Pendel-Akku (2A) einerseits und das Verbraucher-Arbeitsgerät (1), insbesondere der Verbraucher-Akku (1A) und/oder die Basisstation (8), insbesondere deren Ladestation (3) zueinander komplementäre Kupplungs-Teile (9a, b) aufweisen.

13. System nach einem der vorhergehenden System-Ansprüche,
**dadurch gekennzeichnet, dass**
das selbstfahrende Verbraucher-Arbeitsgerät (1) aus
- einem selbstfahrenden Chassis (1.1) mit einem Fahrantrieb (1.1a) und
- einem daran befestigbaren, insbesondere darauf aufsattelbaren und von diesem abstellbaren, Arbeitsgerät-Aufbau (1.2) besteht.

14. System nach einem der vorhergehenden System-Ansprüche,
**dadurch gekennzeichnet, dass**
- der Verbraucher-Akku (1A) einen Daten-Anschluss (1A2) aufweist und/oder
- der Pendel-Akku (2A) einen Daten-Anschluss (2A2) aufweist und/oder
- die Basisstation (8), insbesondere deren Ladestation (3), einen DatenAnschluss (3A2) aufweist.

15. System nach einem der vorhergehenden System-Ansprüche,
**dadurch gekennzeichnet, dass**
- die Lade-Kupplung (9) als Kombi-Kupplung ausgebildet ist, deren Kupplungs-Teile (9a, b) jeweils neben dem Lade-Anschluss einen DatenAnschluss aufweisen, deren zueinander jeweils komplementäre Anschlüsse bei Erreichen einer definierten Position (P1, P2) der beiden Kupplungs-Teile (9a, b) zueinander automatisch gekoppelt werden,
und/oder
- die Fahrzeuge, seien es Pendel-Fahrzeuge (2) oder selbstfahrende Arbeitsgeräte (1), als autonom fahrende Fahrzeuge ausgebildet sind, wobei auch die benötigte Energie für die Sensorik und Steuerung für das autonome Fahren aus dem Verbraucher-Akku (1A) und/oder. Pendel-Akku (2 Paar) geliefert wird und/oder die benötigten Daten ebenfalls mittels des Pendel-Fahrzeuges (2) übermittelt werden.

## Claims

1. **Method** for charging at least one electrical, in particular mobile, consumer battery (1A) which is not or rarely in contact with a power supply system,
where
a double swing battery (2A) which is part of a double swing vehicle (2) with a self-propelled chassis (2.1) with a traction drive (2.1 a),
- is charged at a charging station (3) remote from the consumer battery (1A),
- is brought to the at least one consumer battery (1A) in a charged state,
- charges the consumer battery (1A),
- is brought back to the charging station (3) and
- is reloaded there,
**characterised in that**
- the double swing vehicle (2), in addition to supplying power to the consumer battery (1A), is also used to transport products to the consumer battery (1A) and to the charging station (3) by comprising a double swing body (2.2) attachable thereto which is mountable and dismountable to transport products, and
- the double swing battery vehicle (2) is a product transporter for an airport apron.

2. Method according to claim 1,
**characterised in that**
the double swing battery (2A) is brought to the next consumer battery (1A) to be charged after charging a first consumer battery (1A), in particular until the double swing battery (2A) is discharged.

3. Method according to any one of the preceding claims,
**characterised in that**
the double swing battery (2A) transports not only electric current but also data from the charging station (3) to the consumer battery (1A) and back if necessary.

4. Method according to any one of the preceding claims,
**characterised in that**
- the consumer battery (1A) is a component of a consuming working device (1), in particular of a self-propelled consuming working device (1),
- the working functions of the consuming working device (1) and/or the traction drive (1a) of the self-propelled consuming working device (1) are electrically operated,
and/or
- the charging station (3) functions automatically so that if a double swing battery (2A), in particular a double swing vehicle (2), is located at the base station (8), it automatically contacts and charges its double swing battery (2A).

5. **Power supply system** with
- at least one consumer battery (1A) with a charging port (1A1),
- a double swing battery (2A) having a charging port (2A1) for charging and discharging the double swing battery (2A), the double swing battery (2A) being part of a double swing vehicle (2) having a self-propelled chassis (2.1) with a traction drive (2.1 a), and
- a charging station (3) for the double swing battery (2A) with a charging port (3A1) matching with the charging port (2A1) of the double swing battery (2A),
**characterised in that**
- the double swing vehicle (2) comprises a double swing body (2.2) which can be attached thereto and set down therefrom, so that the double swing vehicle (2), in addition to supplying power to the consumer battery (1A), can also be used to transport products to the consumer battery (1A) and to the charging station (3) at the same time, and
- the double swing vehicle (2) is a product transporter for an airport apron.

6. System according to claim 5,
**characterised in that**
- the charging station (3) is stationary, and/or
- the consumer battery (1A) is a component of a consuming working device (1), in particular of a self-propelled consuming working device (1),
- the working functions of the consumer working device (1) and/or the traction drive (1a) of the self-propelled consumer implement (1) are electrically operated.

7. System according to any of the preceding system claims,
**characterised in that**
- the working functions of the double swing vehicle (2), and/or the travel drive (2a) of the self-propelled double swing vehicle (2), are electrically operated.

8. System according to any of the preceding system claims,
**characterised in that**
- the charging station (3) is a grid-connected charging station (3) or a supply battery (3'),
and/or
- the charging station (3) is part of a base station (8).

9. System according to any of the preceding claims,
**characterised in that**
- the consumer battery (1A), in particular the consuming working machine (1), in particular the self-propelled consuming working machine (1), is located remotely from a fixed charging station (3), in particular on a construction site, an airport apron or in the open countryside.

10. System according to any of the preceding claims,
**characterised in that**
- the consuming working device (1) is a working device for the airport apron, in particular a high-loader (4) for containers or an aircraft luggage conveyor belt
and/or
- the double swing vehicle (2) is a container transporter (6) or a luggage transporter whose base station (8) is a loading and unloading station which is present in particular at a loading ramp (9).

11. System according to any of the preceding system claims,
**characterised in that**
it comprises a charging coupling (9), the coupling parts (9a, b) of which automatically couple the charging port (2A1) of the shuttle battery (2A) to the charging port (1A1) of the consumer battery (1A) or to the charging port (3A1) of the charging station (3), in particular of a base battery (3') located there, when the shuttle vehicle (2), in particular the double swing battery (2A), is located in a defined position (P1, P2) relative to the consuming working device (1), in particular to the consumer battery (1A), or relative to a base station (8), in particular to the charging station (3).

12. System according to any of the preceding system claims,
**characterised in that**
the double swing vehicle (2), in particular the double swing battery (2A), on the one hand, and the consuming working device (1), in particular the consumer battery (1A) and/or the base station (8), in particular its charging station (3), on the other hand, have complementary coupling parts (9a, b).

13. System according to any of the preceding system claims,
**characterised in that**
the self-propelled consuming working device (1) comprises
- a self-propelled chassis (1.1) with a traction drive (1.1a) and
- an working device body (1.2) which can be attached to it, in particular which can be mounted on it and parked by it.

14. System according to any of the preceding system claims,
**characterised in that**
- the consumer battery (1A) has a data port (1A2)
and/or
- the double swing battery (2A) has a data port (2A2)
and/or
- the base station (8), in particular its charging station (3), has a data port (3A2).

15. System according to any of the preceding system claims,
**characterised in that**
- the charging coupling (9) is embodied as a combination coupling, the coupling parts (9a, b) of which each have a data port in addition to the charging port, the connections of which, which are complementary to each other, are automatically coupled to each other when a defined position (P1, P2) of the two coupling parts (9a, b) is reached,
and/or
- the vehicles, be they double swing vehicles (2) or self-propelled double swing vehicles (1), are double swing vehicles as autonomously driving vehicles, whereby also the required energy for the sensor system and control for autonomous driving is supplied from the consumer battery (1A) and/or the double swing battery (2) is supplied and/or the required data are also transmitted by means of the double swing vehicle (2).

## Revendications

1. **Procédé** pour charger au moins un accumulateur électrique consommateur (1A), en particulier un accumulateur mobile, qui n'est pas ou rarement en contact avec un réseau électrique, dans lequel
un accumulateur navette (2A), qui fait partie d'un véhicule navette (2) avec un châssis automoteur (2.1) avec un entraînement de déplacement (2.1a),
- est chargé à une station de charge (3) éloignée de l'accumulateur consommateur (1A),
- est amené à l'état chargé audit au moins un accumulateur consommateur (1A),
- charge l'accumulateur consommateur (1A),
- est ramenée à la station de charge (3) et
- y est à nouveau chargé,
**caractérisé en ce que**
- le véhicule navette (2) est utilisé en plus de l'alimentation en courant de l'accumulateur consommateur (1A) aussi simultanément pour le transport de produits vers l'accumulateur consommateur (1A) et vers la station de charge (3), **en ce qu'**il comprend une structure navette (2.2) pouvant être fixée à celui-ci, qui peut être attelée et déposée pour transporter des produits, et
- le véhicule navette (2) est un transporteur de produits pour une aire de trafic d'aéroport.

2. Procédé selon la revendication 1,
**caractérisé en ce que**
après la charge d'un premier accumulateur consommateur (1A), l'accumulateur navette (2A) est amenée à l'accumulateur consommateur suivant (1A) à charger, notamment jusqu'à ce que l'accumulateur navette (2A) soit déchargé.

3. Procédé selon l'une des revendications précédentes,
**caractérisé en ce que**
l'accumulateur navette (2A) transporte, outre le courant électrique, aussi des données de la station de charge (3) à l'accumulateur consommateur (1A) et éventuellement en retour.

4. Procédé selon l'une des revendications précédentes,
**caractérisé en ce que**
- l'accumulateur consommateur (1A) fait partie d'un appareil de travail consommateur (1), en particulier d'un appareil de travail consommateur automoteur (1),
- les fonctions de travail de l'appareil de travail consommateur (1) et/ou l'entraînement de déplacement (1a) de l'appareil de travail consommateur automoteur (1) sont actionnés électriquement,
et/ou
- la station de charge (3) fonctionne automatiquement de sorte que, lorsqu'un accumulateur navette (2A), en particulier un véhicule navette (2), se trouve à la station de base (8), elle contacte et charge automatiquement son accumulateur navette (2A).

5. **Système d'alimentation électrique** avec
- au moins un accumulateur consommateur (1A) avec une connexion de charge (1A1),
- un accumulateur navette (2A) avec une connexion de charge (2A1) pour charger et décharger l'accumulateur navette (2A), l'accumulateur navette (2A) faisant partie d'un véhicule navette (2) avec un châssis automoteur (2.1) avec un entraînement de déplacement (2.1a), et
- une station de charge (3) pour l'accumulateur navette (2A) avec une connexion de charge (3A1) adaptée à la connexion de charge (2A1) de l'accumulateur navette (2A),
**caractérisé en ce que**
- le véhicule navette (2) comprend une structure navette (2.2) pouvant être fixée à celui-ci, qui peut être attelée et déposée, de sorte que le véhicule navette (2) peut être utilisé, en plus de l'alimentation en courant de l'accumulateur consommateur (1A), simultanément pour le transport de produits vers l'accumulateur consommateur (1A) et vers la station de charge (3), et
- le véhicule navette (2) est un transporteur de produits pour une aire de trafic d'aéroport.

6. Système selon la revendication 5,
**caractérisé en ce que**
- la station de charge (3) est fixe, et/ou
- l'accumulateur consommateur (1A) fait partie d'un appareil de travail consommateur (1), en particulier d'un appareil de travail consommateur automoteur (1),
- les fonctions de travail de l'appareil de travail consommateur (1) et/ou l'entraînement de déplacement (1a) de l'appareil de travail consommateur automoteur (1) sont actionnés électriquement.

7. Système selon l'une des revendications précédentes,
**caractérisé en ce que**
- les fonctions de travail du véhicule navette (2) et/ou l'entraînement de déplacement (2a) du véhicule navette automoteur (2) sont actionnés électriquement.

8. Système selon l'une des revendications précédentes,
**caractérisé en ce que**
- la station de charge (3) est une station de charge (3) reliée au réseau ou un accumulateur d'alimentation (3'),
et/ou
- la station de charge (3) est comprise dans une station de base (8).

9. Système selon l'une des revendications précédentes,
**caractérisé en ce que**
- l'accumulateur consommateur (1A), notamment la machine de travail consommatrice (1), notamment la machine de travail consommatrice automotrice (1), est située à distance d'une station de charge fixe (3), notamment sur un chantier, une aire de trafic d'aéroport ou en pleine nature.

10. Système selon l'une des revendications précédentes,
**caractérisé en ce que**
- La machine de travail consommatrice (1) est une machine de travail pour l'aire de trafic d'aéroport, notamment un high loader (4) pour conteneurs ou un convoyeur de bagages d'avion,
et/ou
- le véhicule navette (2) est un transporteur de conteneurs (6) ou un transporteur de bagages dont la station de base (8) est une station de chargement et de déchargement, notamment présente sur un quai de chargement (9).

11. Système selon l'une des revendications précédentes,
**caractérisé en ce que**
il comprend un accouplement de charge (9) dont les parties d'accouplement (9a, b) couplent automatiquement la connexion de charge (2A1) de l'accumulateur navette (2A) à la connexion de charge (1A1) de l'accumulateur consommateur (1A) ou à la connexion de charge (3A1) de la station de charge (3), en particulier d'un accumulateur de base (3') de celle-ci, lorsque le véhicule navette (2), en particulier l'accumulateur navette (2A), se trouve dans une position définie (P1, P2) par rapport à l'appareil de travail consommateur (1), en particulier à l'accumulateur consommateur (1A), ou par rapport à une station de base (8), en particulier à la station de charge (3).

12. Système selon l'une des revendications précédentes,
**caractérisé en ce que**
le véhicule navette (2), en particulier l'accumulateur navette (2A) d'une part, et l'appareil de travail consommateur (1), en particulier l'accumulateur consommateur (1A) et/ou la station de base (8), en particulier sa station de charge (3), présentent des pièces d'accouplement (9a, b) complémentaires les unes des autres.

13. Système selon l'une des revendications de système précédentes, **caractérisé en ce que**
l'appareil de travail consommateur automoteur (1) est composé
- d'un châssis automoteur (1.1) avec un entraînement de déplacement (1.1a) et
- d'une structure d'outil de travail (1.2) pouvant être fixée sur celui-ci, en particulier pouvant être attelée sur celui-ci et déposée par celui-ci.

14. Système selon l'une des revendications précédentes,
**caractérisé en ce que**
- l'accumulateur consommateur (1A) présente une connexion de données (1A2)
et/ou
- l'accumulateur navette (2A) présente une connexion de données (2A2)
et/ou
- la station de base (8), en particulier sa station de charge (3), présente une connexion de données (3A2).

15. Système selon l'une des revendications de système précédentes, **caractérisé en ce que**
- l'accouplement de charge (9) est réalisé sous la forme d'un accouplement combiné dont les parties d'accouplement (9a, b) présentent chacune, outre le raccordement de charge, un raccordement de données dont les raccordements respectivement complémentaires l'un de l'autre sont couplés automatiquement l'un à l'autre lorsqu'une position définie (P1, P2) des deux parties d'accouplement (9a, b) est atteinte,
et/ou
- les véhicules, qu'il s'agisse de véhicules navettes (2) ou d'appareils de travail automoteurs (1), sont conçus comme des véhicules à conduite autonome, l'énergie nécessaire pour les capteurs et la commande pour la conduite autonome étant également fournie par l'accumulateur consommateur (1A) et/ou l'accumulateur navette (2 paires) et/ou les données nécessaires étant également transmises au moyen du véhicule navette (2).
